Europäisches Patentamt

European Patent Office

Office européen des brevets

(11) Publication number: **0 319 141**
**A2**

# (12) EUROPEAN PATENT APPLICATION

(21) Application number: 88310214.7

(22) Date of filing: 31.10.88

(51) Int. Cl.⁴: **B62D 55/26** , **B62D 55/275** , **B62D 55/21**

(30) Priority: 30.11.87 US 126896

(43) Date of publication of application:
07.06.89 Bulletin 89/23

(84) Designated Contracting States:
DE FR GB

(71) Applicant: GENERAL MOTORS CORPORATION
General Motors Building 3044 West Grand
Boulevard
Detroit Michigan 48202(US)

(72) Inventor: Savage, Russell Clarke
511 W. 5th
Anderson, IN 46011(US)
Inventor: Skirha, Martin D.
1007 Forest Drive
Anderson, IN 46011(US)
Inventor: Zeller, Gary P.
Route 4 Box 190
Anderson, IN 46011(US)

(74) Representative: Haines, Arthur Donald et al
Patent Section (F6) Vauxhall Motors Limited
P.O. Box 3 Kimpton Road
Luton, Beds. LU2 OSY(GB)

(54) **Composite tread member for track-laying vehicles.**

(57) A composite tread member (14) used in a track (10) for a track-laying vehicle (12) is moulded from a polymeric material (18) reinforced with abrasion-resistant monofilaments (30). It can be moulded in a reaction-injection-moulding (RIM) process or in a resin-transfer-moulding process by first placing a metal support member (16) and a plurality of reinforcing monofilaments (30) in a mould and then injecting said polymeric matrix material (18) into the mould. The reinforcing monofilaments (30) used in a preferred novel composite tread member (14) can be a silicon carbide particle-filled Nylon 12 monofilament or a monofilament formed by polyaramid fibre bundles extrusion-coated with a polyamide material. The polymeric matrix material (18) used in the composite tread member (14) can be either a Nylon 6 RIM material, a polyurethane RIM material, or a polyurea RIM material. The novel composite tread members of the invention have superior abrasion-resistant properties and durability when compared to a conventional unreinforced tread member.

FIG.1

FIG.2

## COMPOSITE TREAD MEMBER FOR TRACK-LAYING VEHICLES

Field of the invention

The present invention generally relates to a composite tread member for a track-laying vehicle as specified in the preamble of claim 1, for example as disclosed in US-A-3,870 380.

Background of the invention

Track-laying vehicles are broadly used in construction or military applications for their superior tracking capability in rough terrain. A track on a track-laying vehicle is under tremendous strain and severe wear conditions when the vehicle is in operation. This is especially true with modern track-laying vehicles where the vehicle is expected to carry a high load and to be capable of superior acceleration and speed.

A track on a track-laying vehicle can be constructed with either an integral tread system or a replaceable tread system. In the integral tread system, a track is connected by many track units, each of which is moulded of hard rubber material around a steel support member. A track with the integral tread system has the benefit of lightweight construction, however, the entire track must be replaced when the rubber tread surface is worn.

In a track equipped with replaceable tread members, individual tread members are connected by mechanical means to a permanent steel link unit and can be replaced when they are worn. The replaceable tread track can therefore be more easily maintained in the operation of a track-laying vehicle.

Conventional tread members are moulded of hard rubber materials. The durability of the rubber and thus the lifetime of a tread is always a problem in the design of a track. The selection of the rubber material is a difficult task in that different performance requirements of a track-laying vehicle demand different properties of the rubber material. For instance, a high durometer, hard rubber material used in moulding a tread member works well at high speed on smooth roads but disintegrates quickly in rough terrain. On the other hand, a low durometer, soft rubber material would work well in rough terrain but deteriorates quickly on smooth roads at high speeds.

The most commonly seen problems with rubber-moulded tread members are overheating which causes "blowouts", i.e., and catastrophic failure of the rubber, "chunking" where large pieces of the rubber materials fall off the tread member, and rapid wear due to the poor abrasion resistance of the rubber material. In military applications, the high thermal profile of rubber produced during use of the track is also undesirable since a track-laying vehicle such as a tank can be easily detected in the dark by infra-red detectors.

It is, therefore, an object of the present invention to provide a new composite tread member which can be used in a track-laying vehicle equipped with either an integral tread system or a replaceable tread system.

It is another object of the present invention to provide a composite material for the moulding of a tread member used on a track-laying vehicle, which is capable of long surface life and problem-free operations.

It is a further object of the present invention to provide a polymeric composite material for the moulding of a tread member used on a track-laying vehicle, which is capable of providing prolonged surface life without premature failures.

Summary of the invention

A tread member for use in a track for a track-laying vehicle in accordance with the present invention is characterised by the features specified in the characterising portion of claim 1.

The present invention provides a new and novel composite tread member for a track-laying vehicle that is moulded of a polymeric material, or a polymeric matrix material, reinforced with abrasion-resistant monofilaments. A polymeric matrix material that has been employed is a Nylon 6-based reaction-injection-moulding (RIM) material. In the composite tread member of the invention, a metal support member in a binocular shape is embedded in the polymeric material, and forms the back portion of the tread member. The binocular-shaped metal support member functions as the mounting hardware so that the tread member may be connected to the track. Reinforcing monofilaments of substantial length and diameter are embedded in the polymeric matrix material forming the front portion, i.e., the portion constituting the wear surface of the tread member.

In the preferred embodiment of the invention, the reinforcing monofilaments used are Nylon 12 monofilaments loaded with silicon carbide particles. Both Nylon 12 and silicon carbide have superior abrasion-resistant properties. In an alternative embodiment of the invention, bundles of polyaramid fibres are coated with polyamide-forming monofilaments. The polyaramid fibres are extrusion-coated into monofilaments in such a way that the fibres are situated perpendicular to the wear surface of the tread member to provide maximum abrasion resistance.

The novel composite tread members of the invention can be operated on a track-laying vehicle at an operating temperature that is at least 14° C (25° F) lower than the operating temperature of a conventional rubber tread member. The composite tread members of the invention have performed with minimum cracking, chunking, or blowout problems after extensive testing in rough terrain. The tread members have demonstrated an average durability that is 50% longer than that for an unreinforced conventional tread member.

## Brief description of the drawings

Other objects, features and advantages of the present invention will become apparent upon consideration of the specification and the appended drawings in which:

Figure 1 is a perspective view showing a partial track mounted on a track-laying vehicle equipped with composite tread members according to the present invention.

Figure 2 is a perspective view of a composite tread member containing a partial cut-away view of reinforcing monofilaments contained therein.

Figure 3 is an enlarged view of the reinforcing monofilaments shown in Figure 2.

## Detailed description of the preferred and alternate embodiments

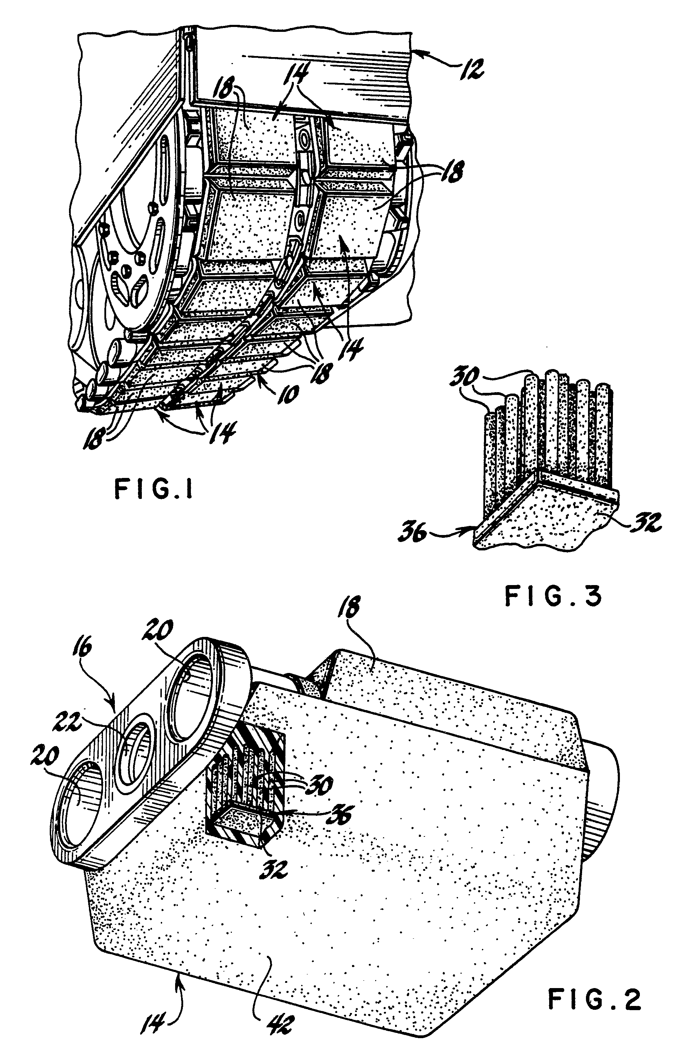

Referring initially to Figure 1, a partial track 10 of a track-laying vehicle 12 is shown. Composite tread members 14 are mounted in track 10 by mechanical means. A perspective view of a composite tread member with a partial cut-away view is shown in Figure 2. A metal support member 16 is embedded in the back portion of tread member 14 by a polymeric matrix material 18. The metal support member 16 has a binocular shape, and is equipped with mounting apertures 20 for connecting to the track and a heat-dissipation aperture 22. The heat-dissipation aperture 22 serves not only to dissipate heat generated in the tread member 14 during operation, but also serves to minimize the amount of polymeric material used. Metal support members have also been used that do not contain the heat-dissipation aperture. Bolt members (not shown) are used to connect tread member 14 to track 10 (Figure 1) through apertures 20. In the cut-away view in Figure 2, which is also shown in Figure 3 enlarged, a plurality of reinforcing monofilaments 30 are extruded Nylon 12 monofilaments filled with silicon carbide particles.

In Figure 3, the length of the Nylon 12 monofilaments 30 is approximately 51 to 76 mms (2 to 3 inches) and the diameters are approximately 1.52 to 2.29 mms (0.060 to 0.090 inches). These monofilaments are extruded and then chopped to suitable length. The monofilaments are filled with 30 weight percent silicon carbide particles to further improve their abrasion resistance. As shown in Figure 3, monofilaments 30, after being chopped to suitable lengths, are cast in a polyurethane backing 32 to retain the positions of the monofilaments. Any other flexible polymeric material, e.g. castable elastomers, may work equally well as the backing material. A brush-like monofilament pad 36 is thus formed after the monofilaments 30 are cast in the polyurethane backing 32.

In the next step of making the composite tread members of the invention, a multi-cavity Kirksite tool having a matched upper and lower mould members (not shown), gated at a parting line, is used for the RIM injection moulding process. A more expensive aluminium or steel tool may also be used in place of the Kirksite tool. The interior mould surfaces of the upper and the lower mould members define a mould cavity. A monofilament pad 36 is first placed in the lower mould member with the polyurethane backing 32 facing the mould surface. A metal support member 16 is then placed on top of the monofilament pad 36. After the upper mould member is closed and locked onto the lower mould member forming a mould cavity containing pad 36 and metal support member 16, liquid Nylon 6 RIM material is injected into the mould. A moulded tread member 14 can be released from the mould after the RIM material is cured in approximately 3-5 minutes. The RIM injection moulding process is conducted in a RIM machine or a RTM (Resin Transfer Moulding) machine at low moulding pressures between 344.7 to 689.5 kPa (50 to 100 psi). The Nylon 6 RIM components are kept in tanks at a temperature between 66-93°C (150-200°F) with the mould temperature set at 120°C (250°F).

Two different types of Nylon 6 RIM material have been used. Table I shows the formulation for a hard Nylon 6 RIM material having a Shore D durometer of 75-80. Table II shows the soft Nylon 6 RIM material which has a Shore D durometer between 35-38. Tread members have been made from both the soft RIM formulation and the hard RIM formulation.

TABLE I

| HARD NYLON 6 RIM COMPOSITION | |
|---|---|
| A-Part | Parts by Weight |
| Polyether Polyol Prepolymer (Monsanto P-1) | 21.9 |
| Caprolactam (Nipro) | 27.1 |
| Antioxidant (Monsanto Flectol (R.T.M.) H) | 0.5 |
| B-Part | |
| Caprolactam (Nipro) | 38.8 |
| Magnesium Bromide Catalyst (Monsanto C-1) | 11.2 |

TABLE II

| SOFT NYLON 6 RIM COMPOSITION | |
|---|---|
| A-Part | Parts by Weight |
| Polytetramethylene Polyol Prepolymer (Monsanto P-4) | 43.7 |
| Caprolactam (Nipro) | 5.4 |
| Antioxidant (Monsanto Flectol (R.T.M.) H) | 0.44 |
| B-Part | |
| Caprolactam (Nipro) | 42.5 |
| Magnesium Bromide Catalyst (Monsanto C-1) | 7.5 |

Figure 2 shows a composite tread member injection-moulded of Nylon 6 RIM material. It is seen that Nylon 12 monofilaments 30 are oriented substantially perpendicularly to wear surface 42 of tread member 14 to obtain the maximum abrasion resistance. The polyurethane backing 32 of the monofilament pad 36 is covered by a thin layer of Nylon 6 RIM material 18 on the wear surface 42. This thin layer of Nylon 6 RIM material wears out quickly in the initial operation of the tread to expose the more abrasion resistant monofilaments 30 on wear surface 42 such that maximum wear resistance of the composite tread member 14 can be realized.

Other materials can be used in place of Nylon 6 RIM material as the polymeric matrix material in the composite tread members of the present invention. For instance, polyurethane RIM material, polyurea RIM material or any other polymeric material that has good abrasion-resistant property can be used. It has been found specifically that polyurethane RIM material and polyurea RIM material work satisfactorily as the polymeric matrix material in the composite tread member of the invention.

Nylon 12 monofilaments filled with silicon carbide particles have been utilized as the reinforcing fibres in the preferred embodiment of the invention. However, any other wear-resistant monofilaments made of polymeric materials with or without particulate fillers can be suitably used for the same purpose. These materials include but are not necessarily limited to, Nylon 6, Nylon 66, and polyolefin materials.

In an alternative embodiment of the invention, monofilaments made by coating polyaramid fibre bundles with polyamide are used in place of the Nylon 12/silicon carbide monofilaments. In this process, fibre bundles of polyaramid are pulled through an extrusion die and coated with a coating of molten polyamide. The thickness of the coating may be controlled as desired in this pressure extrusion process. It has been found that a suitable size of polyaramid/polyamide monofilaments is about 2.29 mms (0.090 inch) in diameter containing about 30 to 45 weight percent polyaramid. The polyaramid fibre bundles used were supplied by the Dupont company under the tradename of Kevlar (R.T.M.). Specifically, the filaments used were Kevlar (R.T.M.) 29 with a denier of 1500. Each Kevlar (R.T.M.) fibre bundle contained 3-4 ends per centimetre (7-10 ends per inch). The polyamides used were Nylon 66 and Nylon 12 of common extrusion grade. They can be obtained from any one of the numerous Nylon suppliers.

It has been found that the polyaramid/polyamide monofilaments used in alternative embodiment of the invention have similar wear properties to the Nylon 12/silicon carbide monofilaments used in the preferred embodiment. They have both significantly increased the wear resistance of the composite tread members of the invention. Furthermore, the common operational problems associated with conventional rubber tread members are significantly reduced.

From the foregoing, it should be apparent that the present invention provides a novel composite tread member that is far superior in properties and durability when compared to conventional unreinforced tread members.

## Claims

1. A tread member (14) for use in a track (10) for a track-laying vehicle (12) having a continuous endless belt with interconnected link units, in which the tread member (10) is detachably mounted by mechanical means to said link units and has a wear surface (42) for engaging a ground surface on which said vehicle is operated, characterised in that said tread member is a composite tread member (14) which includes a metal support member (16) embedded in a monofilament-reinforced polymeric material (18).

2. A tread member according to claim 1, characterised in that said reinforcing monofilament (30) is oriented in a substantially perpendicular relationship to said wear surface (42) of said tread member (14).

3. A tread member according to claim 1 or 2, characterised in that said reinforcing monofilament (30) is a polymeric material filled with abrasion-resistant particles.

4. A tread member according to claim 3, characterised in that said reinforcing monofilament (30) is a silicon carbide particle-filled polyamide material.

5. A tread member according to claim 1 or 2, characterised in that said reinforcing monofilament (30) is formed by bundles of an abrasion-resistant fibre coated with a polymeric material.

6. A tread member according to claim 5, characterised in that said reinforcing monofilament (30) is formed of bundles of polyaramid fibre coated with a polyamide material.

7. A tread member according to claim 1, characterised in that said polymeric material is a thermosetting resin which is either a reaction product of a polyether polyol prepolymer with caprolactam, or a polyurethane resin, or a polyurea resin.

8. A composite tread member according to any one of claims 1 to 7, when used in a track for a track-laying vehicle.

9. A method for making a tread member (14) for use in a track (10) for a track-laying vehicle (12) having a continuous endless belt with interconnected link units, in which the tread member (10) is detachably mounted by mechanical means to said link units and has a wear surface (42) for engaging a ground surface on which said vehicle is operated, characterised in that the tread member is a composite tread member (14) having a metal support member (16) embedded in a monofilament reinforced polymeric material (18) made by a reaction-injection-moulding process using a matched set of upper and lower mould members having interior mould surfaces defining a mould cavity therein; and said method comprises the steps of: positioning a plurality of monofilaments (30) in the lower mould member in an orientation such that said monofilaments (30) are positioned in a substantially perpendicular relationship to said interior mould surface of said lower mould member, placing a metal support member (16) on top of said monofilaments (30), closing said upper mould member onto said lower mould member to form said mould cavity therein, injecting a quantity of a reaction-injection mouldable polymeric material into said mould cavity and thus embedding said monofilaments (30) and said metal support member (16) therein to form said composite tread member (14), and releasing said composite tread member (14) from said mould cavity after said polymeric material has cured therein.

10. A method for making a tread member (14) according to claim 9, characterised in that said positioning step for the monofilaments (30) further includes the step of casting said monofilaments (30) in a flexible polymeric backing material (32) to form a monofilament pad (36) and then positioning said pad (36) in said lower mould member.

FIG.1

FIG.3

FIG.2